# EUROPÄISCHE PATENTSCHRIFT

(11) **EP 1 347 311 B1**
(45) Veröffentlichungstag und Bekanntmachung des Hinweises auf die Patenterteilung: **08.02.2012**
(21) Anmeldenummer: 03003983.8
(22) Anmeldetag: 22.02.2003
(51) Int. Cl.: G01V 3/10

(54) **Verfahren zum Detektieren von Objekten, insbesondere von Metallobjekten**
Method for detecting objects, particularly metal objects
Procédé de détection d'objets, particulièrement d'objets métalliques

(30) Priorität: 23.03.2002 DE 10213115; 23.07.2002 DE 10233352
(43) Veröffentlichungstag der Anmeldung: 24.09.2003
(73) Patentinhaber: Roatzsch, Lorenz, 30173 Hannover (DE)
(72) Erfinder: Roatzsch, Lorenz, 30173 Hannover (DE)
(74) Vertreter: Walther, Robert

(56) Entgegenhaltungen:
- EP-A1- 0 892 285
- EP-A2- 0 729 039
- EP-A2- 0 743 539
- EP-A2- 0 780 705
- WO-A1-94/04996
- WO-A1-99/31529
- WO-A2-01/18561
- DE-A1- 3 827 024
- US-A- 6 064 209

## Beschreibung

Die Erfindung betrifft ein Verfahren zum Detektieren , vorzugsweise zum Aussortieren von Objekten einer bestimmten Materialeigenschaft, insbesondere von Metallobjekten und/oder Buntmetallen untereinander, unter Verwendung eines Detektors, welcher eine Detektion der Materialeigenschaft und Erfassung des Ortes eines Objektes, insbesondere innerhalb eines Schüttguts vornimmt.

Aus der Druckschrift GB 20 41 532 A ist ein Metalldetektor nach einem sogenannten Puls-Induktionsverfahren bekannt, mit dem unterschiedliche Metallgegenstände, wie eine Münze, ein Metallstab oder eine Metallplatte, also Gegenstände unterschiedlicher Größe, detektiert werden können. Der Detektor besteht aus einem Schleifenpaar mit einer Sendeschleife und einer korrespondierenden Detektorschleife, die eine einzige Sonde bilden. Zum Detektieren wird zunächst ein Rechteckimpuls an die Sendeschleife angelegt, welches in dieser ein Magnetfeld erzeugt. In Abhängigkeit ob und was für ein Metallgegenstand im Sondenbereich vorhanden ist, wird ein mehr oder weniger stark exponentiell fallendes Signal in der als Empfangsschleife ausgebildeten Detektorschleife induziert. Damit dieser Signalabfall ermittelt werden kann, wird ein zeitverzögert zum Rechteckimpuls zeitnaher Wert mittels einer Sample- und Hold-Stufe festgehalten bzw. abgetastet und später ein zweiter Wert mit einer zweiten Sample- und Hold-Stufe ebenfalls abgetastet, wobei das Abtasten einer Integration des Signals entspricht, da jeweils ein Kondensator vorgesehen ist. Die Differenz der in den Kondensatoren gespeicherten Spannungswerte gibt Aufschluss über das Vorhandensein bzw. Größe eines Metallgegenstandes. Dieser Metalldetektor dient aber lediglich zur Lokalisierung verborgener Metallgegenstände im Erdreich und ist als Schatzsuchgerät bekannt.

Ein weiterer Detektor zur Lokalisierung verborgener Metallgegenstände im Erdreich in Puls-Induktionstechnik ist aus der EP 0 729 039 A2 bekannt. Dieser Detektor weist nur eine einzige Schleife auf. Kurze Einzelimpulse, die von der Schleife ausgesandt werden, induzieren in dem im Erdreich gesuchten Metallgegenstand Wirbelströme. Diese Wirbelströme bewirken ein Sekundärfeld, das ein objektspezifisches Abklingverhalten aufweist. Der zeitliche Verlauf des so erzeugten magnetischen Echos ist von der Größe und Materialbeschaffenheit des aufgespürten Metallgegenstandes abhängig. Die Materialbeschaffenheit des aufgespürten Metallgegenstandes kann jedoch nicht unabhängig von der Größe des Metallgegenstandes ausgewertet werden, denn ein großer Metallgegenstand täuscht eine andere Metallbeschaffenheit als ein kleinerer vor. Auch ist nur eine einzige Sonde vorhanden, so dass zum Suchen mit Hilfe dieses Gerätes ein manuelles Hin- und Herbewegen der einzigen Sonde erforderlich ist.

Die Druckschrift EP 0 743 539 A2 beschreibt eine matrixförmige Sondenanordnung mit Puls-Induktions-Einzelsonden, die derart ausgebildet sind, dass lediglich Ort und Lage eines detektierten Metallobjekts im Boden erkannt werden kann. Bei dieser Anordnung handelt es sich ebenfalls um einen Metalldetektor zur Lokalisierung verborgener Metallgegenstände im Erdreich. Die Funktionstüchtigkeit ist allerdings nur gering, da sich die Sonden gegenseitig beeinflussen, auch wegen der unterschiedlichen Empfindlichkeit der Einzelsonden.

Besonders interessant ist für die Industrie die Trennung unterschiedlicher Buntmetalle untereinander mit einer Sortieranlage, wie sie zum Recyceln verwendet wird.

Aus der DE 198 38 249 A1 ist eine Sortieranlage zum Sortieren von metallischen Partikeln bekannt, mit der es möglich sein soll, herauszufinden, welche Materialien Metallpartikel besitzen. Diese Anlage besteht aus einem Detektor mit Einzelsonden in Array-Anordnung mit hoher räumlicher Auflösung. Die Partikel durchlaufen ein magnetisches Wechselfeld im Frequenzbereich von 0,1 MHz bis 1,0 MHz. In den metallischen Partikeln entstehen Wirbelströme, die das Magnetfeld abschwächen. Diese Änderungen des Magnetfeldes werden von magneto-resistiven Sensoren erfasst und in elektronische Signale umgewandelt, die ausgewertet werden. Die Empfindlichkeit dieses Detektors und der hierfür erzeugte Signalverkauf reicht aber in der Praxis nicht aus, um beispielsweise Buntmetalle zuverlässig untereinander auszusortieren. Zudem ist dieser Detektor relativ aufwendig und kann nur für die Trennung von Eisen und Nicht-Eisenfragmenten mit bestimmter, einheitlicher Materialgröße überhaupt Verwendung finden.

Eine Vorrichtung und ein Verfahren, mit der es möglich ist, Metalle unterschiedlicher Farbe, also Buntmetalle untereinander, auszusortieren, ist in der DE 100 03 562 A1 aufgezeigt und beschrieben. Eine Unterscheidung der Buntmetalle wird erst durch einen optischen Sensor möglich, der als Kamera ausgebildet ist, wobei Metallfragmente ausgeleuchtet werden müssen. Zum Aussortieren sind verschiedene Luftdüsen vorhanden, die einen Schüttgutstrom im freien Fall sortieren können. Zwar ist auch ein zweiter Detektor angeordnet, der als Metalldetektor ausgebildet ist, dieser kann verschiedene Buntmetalle untereinander aber nicht unterscheiden. Der Metalldetektor kann nur verschiedene Metalle untereinander, wie Eisenmetalle und Nicht-Eisenmetalle, überhaupt unterscheiden. Er ist daher in der Praxis nur in Kombination mit dem optischen Sensor einsetzbar. Der optische Sensor unterscheidet Metall nur nach seinem Aussehen, nicht jedoch nach seinem magnetischen Eigenschaften.

Aus der WO 01 18561 ist ein Verfahren zum Detektieren von Objekten unter Verwendung eines Detektors bekannt. Dieser nimmt eine Detektion der Materialeigenschaft und Erfassung des Ortes eines Objektes vor. Die Detektion erfolgt mittels mehrerer Puls-Induktions-Einzelsonden, die den Detektor bilden und Induktions-Signale der Objekte erfassen. Änderungen der von den Objekten ausgestrahlten Induktions-Signalen werden ausgewertet. Die Puls-Induktions-Einzelsonden werden der Reihenfolge nach zeitversetzt gepulst. Eine Münzerfassungseinrichtung, die dieses Detektionsprinzip nutzt, ist aus der WO 94 04996 bekannt.

Es sind auch Verfahren bekannt, bei der eine Verdampfung von zu trennenden Materialien mit einem Laser erfolgt oder eine radioaktive Bestrahlung dieser Materialien vorgenommen wird. Diese Verfahren sind jedoch relativ aufwendig.

Ferner ist es bekannt und üblich, sogenannte Magnetscheider zum Vorsortieren ferromagnetischer Materialien von anderen Verbundstoffen einzusetzen, wobei eine anschließende Trennung aller übrigen Metalle mittels Wirbelstromscheider erfolgt.

Der Erfindung liegt die Aufgabe zugrunde ein Verfahren der eingangs genannten Art zu finden, mit dem eine zuverlässige und schnelle Detektion, insbesondere zum Zwecke der Trennung von verschiedenen Objekten, insbesondere von Buntmetallen untereinander, in einfacher Weise möglich ist.

Diese Aufgabe wird dadurch gelöst, dass Gruppen von nicht unmittelbar nebeneinander angeordneten Puls-Induktions-Einzelsonden (4) nacheinander gepulst werden.

Die Puls-Induktions-Einzelsonden werden der Reihenfolge nach zeitversetzt gepulst, wobei eine Erkennung von Metallen wesentlich beschleunigt wird, wenn Gruppen von, insbesondere 5 bis 15, nicht unmittelbar benachbart nebeneinander angeordneten Puls-Induktions-Einzelsonden nacheinander gepulst werden. Eine Einkopplung von unerwünschten Signalen in benachbarte Sonden wird so verhindert. Durch die schnellere Erkennung können Förderbandgeschwindigkeiten erhöht werden. Zweckmäßigerweise erfolgt eine Auswertung in Zeitzwischenräumen zwischen den einzelnen Pulsen oder genau zeitgleich mit den Pulsen.

Das erfindungsgemäße Verfahren ermöglicht nicht nur eine genaue Detektion , sondern insbesondere auch eine sehr präzise und schnelle Trennung auch von Buntmetallen untereinander. Es kann auf diese relativ einfache Weise in Scheidern ein Durchsatz von etwa 2 bis 6 Tonnen Material pro Meter in der Stunde erreicht werden.

Die Erfindung beruht auf der Erkenntnis, dass bei Anordnung einer Vielzahl von Puls-Induktions-Einzelsonden eine Größenerkennung von einer Materialerkennung eines Metallobjekts getrennt werden kann, wobei das echoartige Sekundärsignal sich derart verändert, dass eine Materialerkennung in überraschend genauer Weise möglich ist.

Der Detektor weist eine geringe Erholzeit auf, was ein nahezu sofortiges Rücksetzen und ein statisches Anzeigeverhalten ermöglicht. Ansprechverhalten und Empfindlichkeit können in einem weiten Bereich einstellbar sein, wobei keine magnetische Übersättigung möglich ist, was eine gute Dynamik ermöglicht. Im Gegensatz zu großen, umlaufenden Sendespulen und mehreren darin angeordneten Empfangssondenanordnungen ist bei dem betriebenen Detektor die Empfindlichkeit jeder Einzelsonde gleich.

Weitere vorteilhafte Merkmale der Erfindung sind in den Unteransprüchen beschrieben und in der Beschreibung näher erläutert.

In einer bevorzugten Weiterbildung des erfindungsgemäßen Verfahrens ist vorgesehen, dass jeweils eine Signaländerung einer Puls-Induktions-Einzelsonde ein Analogsignal in Form einer im Wesentlichen exponentiell fallenden Abklingkurve darstellt, dass mindestens ein - in mindestens einem ersten Zeitfenster aufintegriertes - erstes Signal gebildet wird, welches zeitnah zu einem Rechteck-Sendeimpuls wird und mindestens einen ersten Abtastwert bildet, dass mindestens ein - in mindestens einem zweiten Zeitfenster - aufintegriertes zweites Signal gebildet wird, welches im flacheren Verlauf der Abklingkurve entsteht und mindestens einen zweiten Abtastwert bildet, und dass mindestens ein Differenzsignal aus mindestens den beiden Zeitfenstern erzeugt wird, welches eine Information über die Steilheit der Abklingkurve beinhaltet, die einer Zeitkonstante des Metallobjekts entspricht und zum Aussortieren dient. Hierdurch können Kenntnisse aus der an sich bekannten Puls-Induktionstechnik genutzt werden.

Eine schnelle Signalverarbeitung, die hohe Fließbandgeschwindigkeiten ermöglicht, wird dadurch erreicht, dass das Differenzsignal ein analoges Signal ist.

Günstig ist es, wenn mehr als drei Abtastwerte gebildet werden und eine anschließende rechnerische Verarbeitung in digitaler Form erfolgt, da auf diese Weise ein Abklingverhalten von Sekundärsignalen genauer erfassbar ist. Zweckmäßig ist es, wenn ein Teil der Abtastwerte zu einer ersten Summe aufaddiert und durch einen Differenzverstärker von einer zweiten Summe des anderen Teils der Abtastwerte subtrahiert wird. Viele Messpunkte ermöglichen eine genaue Messung einer Zeitkonstanten oder eines Signalverlaufs und einen Vergleich mit bereits abgespeicherten Werten.

Um ein genaues Aussortieren von Metallen, insbesondere von Buntmetallen, zu erreichen, ist in einer weiteren Weiterbildung des erfindungsgemäßen Verfahrens vorgesehen, dass bei Erreichen einer vorgegebenen Signalstärke bei einem der ersten Zeitfenster eine Speicherung der übrigen Abtastwerte - vorzugsweise mit einem Mikroprozessor - erfolgt, und dass die abgespeicherten Abtastwerte mit Referenzwerten verglichen werden, die bestimmten Materialeigenschaften, wie der von bestimmten Buntmetallen oder anderen Metallobjekten, zugeordnet sind.

Die Sonden eines Sondenpaars, die Sonden eines Detektors, oder mehreren Spulen einer einzigen Sonde können übereinander angeordnet sein, und wie bei den zuvor nebeneinander angeordneten Sonden, zeitversetzt gepulst werden, so dass eine Entfernung eines Objekts feststellbar ist. Eine solche Anordnung ist insbesondere auch interessant für die Ortung von metallischen Gegenständen im Boden, z. B. um die Tiefe von im Boden liegenden Kampfmitteln zu ermitteln. Um eine Objektgröße festzustellen, können auch ein Sondenpaar oder mehrere Spulen einer einzigen Sonde nebeneinander und/oder zentrisch ineinander angeordnet sein.

Vorteilhaft ist es, wenn eine - vorzugsweise eine einzige fluchtende - Reihe von nebeneinander angeordneten Puls-Induktions-Einzelsonden, die zu einer Detektorleiste zusammengesetzt sind, vorhanden sind. Durch die Leistenform wird auf kostengünstige Weise eine hohe Auflösung möglich, weil ein Abtasten nach dem Prinzip eines Scanners erreicht wird. Hierbei wird ein zweidimensionales Abbild eines Metallobjektes erreicht, wobei die Geschwindigkeit eines Förderbandes eine zweite Dimension darstellt.

Ein gutes Auflösungsvermögen lässt sich dadurch erreichen, dass die Puls-Induktions-Einzelsonden jeweils eine Breite, vorzugsweise einen Durchmesser, von 1 - 5 cm, insbesondere etwa 2,5 cm, aufweisen, wobei mindestens 2, vorzugsweise 20 bis 100, insbesondere etwa 40, Sonden nebeneinander angeordnet sind.

In einer bevorzugten Ausführungsform des Detektors zur Anwendung des erfindungsgemäßen Verfahrens ist vorgesehen, dass die Puls-Induktions-Einzelsonden räumlich versetzt und zwar, insbesondere in Gruppen von 5 bis 15 nicht unmittelbar benachbart nebeneinander angeordneten Sonden, derart triggerbar ausgebildet sind, dass ein Mindestabstand der gleichzeitig sendenden Spulen von mindestens 10 cm, vorzugsweise 20 bis 37,5 cm, über die gesamte Detektorleiste sich fortsetzen kann. Durch die versetzte Triggerung können unerwünschte Einkopplungen der Sonden untereinander in einfacher Weise verhindert werden. Die Triggerung erfolgt in der Weise, dass die gleichzeitig getriggerten Sonden möglichst weit voneinander entfernt sind. Auch eine dem Zufall überlassene, jedoch zeitversetzte Triggerung wäre möglich.

Weiterhin ist bevorzugt vorgesehen, dass im Bereich der Puls-Induktions-Einzelsonden jeweils zweite Puls-Induktions-Einzelsonde angeordnet sind, wobei jeweils ein Sondenpaar gebildet wird, was Fehlmessungen verhindert. Die Anordnung von mehreren Spulen oder Schleifen in einer einzigen Sonde ist zu diesem Zweck auch möglich.
Mit dem erfindungsgemäßen Verfahren kann eine Sortieranlage betrieben werden. Die Sortieranlage ist z. B. mit mindestens einer Auswerte-Einrichtung, die Signale des Detektors verarbeitet und mindestens einer Trennvorrichtung zum Trennen der Metallobjekte versehen, wobei der Detektor im Bereich eines Schüttgut-Förderbandes angeordnet ist.

Eine zuverlässige und schnelle Trennung lässt sich z. B. dadurch erreichen, dass die Trennvorrichtung als Luftdüsen-Anordnung zum definierten Wegblasen der durch die Auswerte-Einrichtung ermittelten Metallobjekten ausgebildet ist.

Eine Schaltungsanordnung zur Durchführung des erfindungsgemäßen Verfahrens kann z. B. derart ausgebildet sein, dass eine Diskriminierung bestimmter Metalle oder mineralhaltiger Fördergüter sowie das Anzeigen dieser Materialien möglich ist. Insbesondere ist es möglich, ein Ausfiltern (Diskriminierung) oder gezieltes Anzeigen bestimmter Metalle oder leitfähiger mineralischer, vorzugsweise magnetischer, Fördergüter zu erreichen. Auch eine materialgezielte Diskriminierung ohne Beeinträchtigung einer Empfindlichkeitseinstellung für andere Metallobjekte ist möglich.

Vorteilhaft ist es, wenn neben mindestens eines infolge eines Impulses in der Puls-Induktion-Spule eigentlich induzierten Signals mindestens ein zweites in der Puls-Induktions-Spule induziertes Signal ausgewertet wird, welches sich aufgrund mindestens einer Materialeigenschaft des Objekts von dem eigentlichen ersten Signal unterscheidet.

Eine vorteilhafte Weiterbildung des erfindungsgemäßen Verfahrens wird durch ein Verfahren nach Anspruch 4 erreicht.

Durch diese Maßnahme kann bei gleichem Sondenabstand eine Beeinflussung von räumlich nebeneinander angeordneten Sonden erheblich reduziert werden, wobei niemals zwei Sonden innerhalb eines bestimmten Bereiches gleichzeitig gepulst werden. Hierdurch wird ein universell einsetzbarer Metalldetektor mit hoher Auflösung möglich. Dieses Verfahren ist auch z. B. zur Minen- und/oder Munitionssuchen einsetzbar. Zum Beispiel können mehrere Sonden, z. B. vier Sonden nebeneinander oder zu einem Quadrat angeordnet werden, wobei die Sonden eine Sondenfläche von etwa 0,25 bis 4 Quadratmeter, insbesondere etwa 1 m x 1 m, aufweisen. Eine Kombination mit anderen magnetoresistiven Sensoren, insbesondere Hall-Sensoren und Plantinen-Multilayer-Spulen ist möglich, wobei die Hall-Sensoren als Empfangsspulen eingesetzt werden können. Das Verfahren kann auch zu Materialprüfzwecken eingesetzt werden, um z. B. Inhomogenitäten in Metallplatten festzustellen.

Anstatt eine Reihe von Sonden direkt nebeneinander zu pulsen, d. h. der Reihenfolge 1-2-3 usw. nach, wird vorzugsweise nur jede n-te, z. B. nur jede 4. Sonde nacheinander gepulst, bis alle Sonden nach mehreren Pulszyklen gepulst sind, wodurch eine Beeinflussung von räumlich nebeneinander angeordneten Sonden bei einer hohen Auflösung sehr gering ist. Diese Ansteuerung nur jeder n-te Sonde nacheinander verhindert, dass größere Metallobjekte auch nach einem Abschalten eines Sendepulses in einer benachbarten Spule bzw. Sonde zeitverzögert kleine unerwünschte Spannungen induzierten. Dies ist dadurch zu erklären, dass die erzeugten Wirbelströme im Metall noch einige hundert Mikrosekungen erhalten bleiben.

Die Erfindung sowie weitere Vorteile derselben werden anhand der Figuren näher erläutert. Es zeigt:
- Figur 1: eine Sortieranlage zum erfindungsgemäßen Trennen von Metallobjekten und
- Figur 2: eine Schaltungsanordnung für einen erfindungsgemäßen Detektor;
- Figur 3: eine Darstellung von Signalverläufen, insbesondere von Primär- und Sekundärsignalen;
- Figur 4: eine Schaltungsanordnung von Spulen einer Sonde,
- Figur 5 und 6: Varianten von Spulenanordnungen;
- Figur 7: Beispiel für die Taktierung einer Einzelsonde.

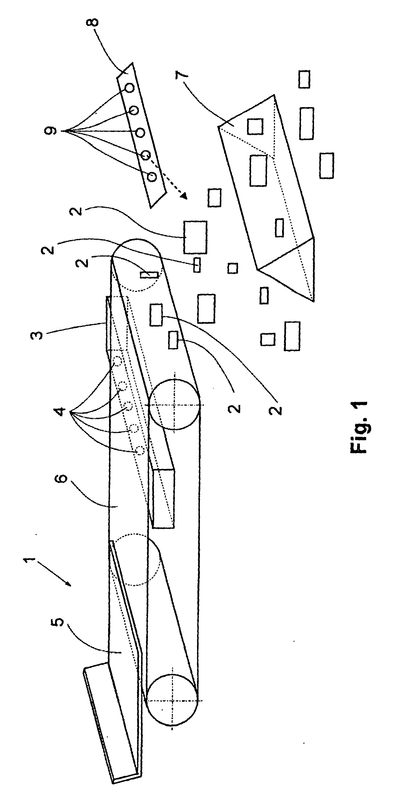

Fig. 1 veranschaulicht eine Sortieranlage 1 zur Erkennung von Metallobjekten 2 und deren Trennung mit einem erfindungsgemäßen Detektor 3 mit Puls-Induktions-Einzelsonden 4, der auf dem Prinzip von induktiven Rückwirkungen basiert. Wie später erläutert ist, können sogar Objekte, die keine Metallobjekte sind (z. B. leitfähige Salze) oder die nur eine Schwingneigung besitzen (wie z.B. dünne Drähte) detektiert werden. Im Folgenden werden sie aber auch als Metallobjekte angesehen.

Die Sortieranlage 1 weist eine als Vibrationsrinne 5 ausgebildete Verteileinrichtung von Objekten auf, insbesondere von Müll, die dazu vorgesehen ist, den Müll bzw. ein Schüttgut gleichmäßig auf ein Förderband 6 zu verteilen.

In dem Müll befinden sich die Metallobjekte 2, die getrennt werden müssen.

Unter Metallobjekte im Sinne dieser Beschreibung sind ganze Gegenstände, Metallfragmente, Metallpartikel, metallhaltige Teile, wie Folien, Elektronikschrott, VA aus Schwermetallen (Schwimm-Sink-Anlagen), NE-Teile (Nicht-Eisen-Teile), Metallteile im Kornbereich von z. B. 10 - 200 mm, Buntmetalle und alle sonstigen Materialien (auch Nichtmetalle), in die Wirbelströme induziert werden können.

Eine Trennung von Schredderschwermüll nach dem Wirbelstromscheiderprinzip ist zusätzlich ebenfalls möglich und kann in den Trennprozess integriert werden. Der auf dem Förderband 6 verteilte Müll wird mit einer Geschwindigkeit von 1 - 3 m/s befördert und läuft, wie in Fig. 1 dargestellt ist, über den Detektor 3, der direkt unter dem Förderband 6 und quer zur Bewegungsrichtung des Mülls angeordnet und dort mit nicht dargestellten Befestigungsmitteln befestigt ist. Höhere Fließbandgeschwindigkeiten sind ohne Weiteres möglich.

Der Detektor 3 besteht erfindungsgemäß aus im Wesentlichen einer - vorzugsweise einer einzigen fluchtenden - Reihe der nebeneinander benachbart angeordneten Puls-Induktions-Einzelsonden 4, die zu einer Detektorleiste zusammengesetzt sind. Er weist im Wesentlichen eine Reihe von Sonden auf, was bedeutet, dass er nicht als Matrix angeordnet ist. Mit einer Reihenanordnung kann bei gleicher Anzahl von Puls-Induktions-Einzelsonden 4 eine viel höhere Auflösung erreicht werden, als bei einer Matrixanordnung gemäß EP 0 743 539 A2. Eine Anordnung der Sonden 4 kann übereinander, überschneidend, versetzt oder im unterschiedlichen Winkel erfolgen. Eine Beeinflussung der Sonden 4 untereinander wird durch eine zeitlich versetzte Ansteuerung, wie noch später erläutert wird, verhindert.

In dem dargestellten Ausführungsbeispiel sind die Sonden 4, wie in Fig. 1 veranschaulicht ist, nebeneinander in einer einzigen Reihe fluchtend angeordnet, wobei dort nicht alle Sonden 4 dargestellt sind, sondern nur fünf, um das Prinzip zu erläutern. Die Puls-Induktions-Einzelsonden 4 weisen jeweils eine Breite, vorzugsweise einen Durchmesser, von 1 - 5 cm, insbesondere etwa 2,5 cm auf, wobei mindestens 2, vorzugsweise 20 bis100, insbesondere etwa 40, Sonden nebeneinander angeordnet sind. Bei der bevorzugten Ausbildung des Detektors 3 weist dieser eine Detektionslänge bzw. Breite von etwa 100 cm auf. Bei dieser gezeigten nicht versetzten Anordnung und bevorzugten Ausbildung der Sonden 4 ergibt sich eine hohe Empfindlichkeit auf unterschiedlich große Metallgegenstände.

Durch Verwendung von Ferritkernen, sogenannten Ferrittöpfen oder sonstigen Ferritelementen kann die Empfindlichkeit gesteigert werden, wobei jedoch eine starke Beeinflussung des empfangenen Signals von Nachteil ist

Die Sonden weisen eine kreisförmige Detektionsfläche auf, wie ferner noch in Fig. 1 zu erkennen ist. Andere Flächen sind aber auch möglich.

In einer vorteilhaften Ausbildung des Detektors 3 sind die Puls-Induktions-Einzelsonden 4 räumlich versetzt, insbesondere in Gruppen von 5 bis 15 nicht unmittelbar nebeneinander benachbart angeordneten Sonden, derart triggerbar ausgebildet, dass ein Mindestabstand von mindestens 10 cm, vorzugsweise 20 bis 37,5 cm, über die gesamte Detektorleiste sich fortsetzen kann. Dies verhindert eine Beeinflussung der Sonden 4 untereinander, wie oben schon angedeutet. D.h., dass niemals zwei benachbarte oder räumlich nahe Sonden 4 gleichzeitig aktiviert werden. Dies ist für eine Auswertung von großer Wichtigkeit. Bei größeren Sondendurchmessern muss der Abstand zwischen den gleichzeitig sendenden Sonden 4 entsprechend größer gewählt werden. Um die Störsicherheit zu erhöhen und Fehlmessungen zu vermeiden sind im Bereich der Puls-lnduktions-Einzelsonden4 jeweils zweite nicht dargestellte Puls-Induktions-Einzelsonden angeordnet, wobei jeweils ein Sondenpaar gebildet wird. Erst wenn das Sondenpaar ein einheitliches Ergebnis liefert, ist dieses richtig.

Wenn der Müll durch den Detektor 3 detektiert worden ist, fallen die Müllteile, d.h. Metallobjekte 2 zusammen mit dem restlichen Müll im freien Fall. Durch ihre Geschwindigkeit fallen die Teile normalerweise, wenn sie nicht abgebremst oder umgelenkt werden, über eine Grenze 7. Hinter der Grenze 7 befindet sich ein weiteres nicht dargestelltes Laufband, das den nicht mit Hilfe des Detektors 3 aussortierten Müll weiterbefördert, um ggf. weiter aussortiert zu werden. Vor der Grenze 7 fallen mit Hilfe der Trennvorrichtung 8 die detektierten Metallobjekte 2 aber in einen Sammelbehälter oder auf ein weiteres Förderband.

Die Trennvorrichtung ist als Luftdüsen-Anordnung 8 zum definierten Wegblasen der durch eine nicht dargestellte Auswerte-Einrichtung ermittelten Metallobjekte 2 ausgebildet. Die Luftdüsen-Anordnung bzw. das Luftdüsensystem weist eine Reihe von nebeneinander angeordneten Luftdüsen mit ansteuerbaren Luftventilen auf, die parallel zum Detektor 3 ausgerichtet ist. Die Luftdüsen 9 sind außerdem nach unten z.B. etwa im 45° Winkel angeordnet, wie in Fig. 1 veranschaulicht ist. Eine Beblasung von unten nach oben (z.B. direkt im Bandbereich) und/oder Anordnung von mehreren Trennvorrichtungen 8 hintereinander ist auch möglich. Auch die Auslösung mehrerer Blasventile durch mehrere Sonden ist bei großen Objekten gleichzeitig möglich.

Prinziphaft sind in Fig. 1 nur ebenfalls fünf Luftdüsen 9 dargestellt. Besonders zweckmäßig ist es, die gleiche Anzahl von Luftdüsen 9 anzuordnen, wie Puls-Induktions-Einzelsonden 4 auf der Detektorleiste vorhanden sind, wobei die einzelnen Luftdüsen 9 zu einer dem Detektor 3 korrespondierenden Lüftdüsenleiste angeordnet sind. Jeweils eine Luftdüse 9 ist einem korrespondierenden Puls-Induktions-Einzelsensor 4 dann zugeordnet und auf gleicher Linie angeordnet.

Die Auswertevorrichtung und die Trennvorrichtung können auch derart modifiziert werden, dass z.B. eine von der Lage eines Objekts oder eines anderen Kriteriums abhängige Trennung auch mit anderen Sensoren, z.B. Metallsensoren, die nicht als Puls-Sensoren ausgebildet sind, möglich ist.

Die Trennvorrichtung 8 ist derart steuerbar, dass sie in Abhängigkeit der Materialeigenschaft und/oder des Ortes und/oder der Größe und/oder der Form eines ermittelten Metallobjektes eine Trennung vornimmt. So kann eine Trennung grundsätzlich nach einem bestimmten Buntmetall erfolgen (Materialeigenschaft) oder unter Berücksichtigung in welchem Luftdüsenbereich das Metallobjekt auf dem Förderband läuft, d.h. linke Düsen, mittlere Düsen usw. (Ort) oder in Abhängigkeit der Grundfläche des Metallobjekts (Größe) damit die Düsen entsprechend lang oder intensiv (oder beides) aktiviert werden können oder unter Berücksichtigung einer typischen Form, z.B. Getränkedose, oder sonstigen Form, z.B. längliches Objekt, oder einer z.B. schrägwinkligen Lage eines länglichen Objektes auf dem Förderband (Form) oder nach einer beliebigen Kombination dieser Kriterien erfolgen, vorzugsweise aber aller Kriterien. Entsprechend können die Luftdüsen in allen Fällen zeitlich und/oder intensiv angesteuert werden. Grundsätzlich können mit der Trennvorrichtung nicht nur Metallobjekte, sondern auch Nichtmetall-Objekte getrennt werden. Die Detektion der Nichtmetall-Objekte kann durch einen zusätzlichen Nichtmetall-Detektor teilweise erreicht werden, wie später erläutert ist

Eine Detektion unter Berücksichtigung aller oben genannten Kriterien ist mit dem nicht optischen Detektor möglich, weil seine Einzelsonden, im Prinzip wie ein Pixel einer CCD-Kamera wirken, so dass ein "fotografisches" Abbild des vorbeilaufenden Metallobjekts 2 erfolgt. Eine Kombination mit anderen optischen Systemen, z.B. mit einer Lichtschranke oder einer Zeilenkamera, ist möglich.

Die Trennvorrichtung 8 weist bevorzugt Luftblas-Elemente, vorzugsweise Luftdüsen und Ventile, auf, aber auch andere Trennelemente, z.B. nach magnetischen Prinzipien arbeitend, sind ebenfalls möglich.

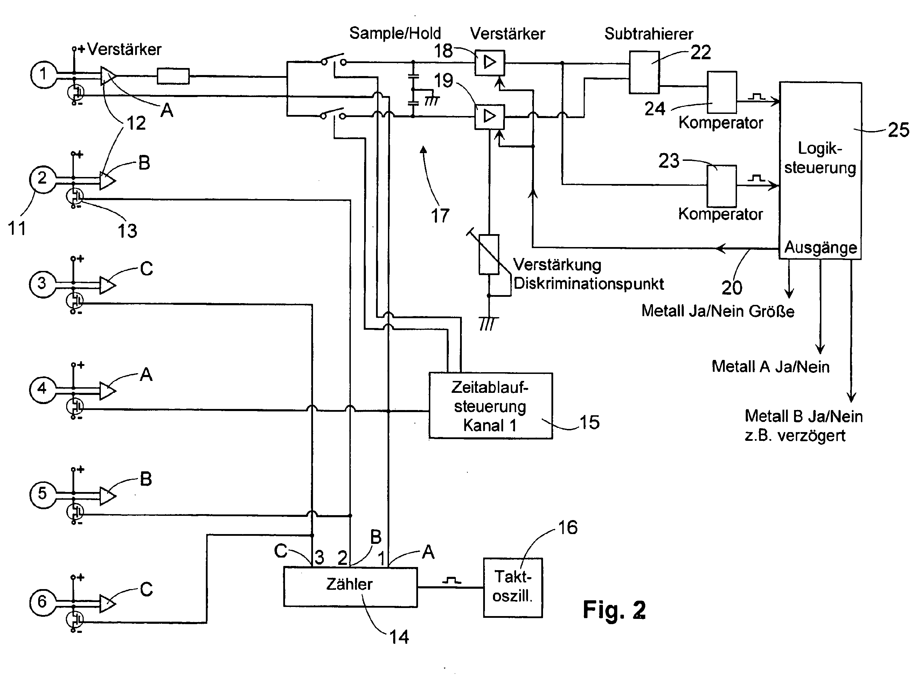

Die Auswerte-Einrichtung, die Signale des Detektors 2 empfängt und verarbeitet, wird mit der in Fig. 2 dargestellten Schaltungsanordnung realisiert. Mit dieser Schaltungsanordnung ist ein Durchführen des erfindungsgemäßen Verfahrens möglich.

Die Schaltung zeigt Operationsverstärkerschaltungen 10, die den Puls-Induktions-Einzelsonden 3 zugeordnet sind. Diese Induktions-Einzelsonden senden monopolare oder bipolare Einzelimpulse unterschiedlicher Länge; selbstverständlich können auch Serien von unterschiedlich langen Pulsen von der Sendespule nacheinander gesendet werden. Die Frequenz oder die Pulsbreite der Pulse können innerhalb eines bestimmten Frequenzspektrums eingeschaltet oder durchgewobbelt werden. Die Sonden 3 sind in Fig. 2 als Induktionsschleifen 11 dargestellt und auch so ausgebildet, wobei ein Sondengehäuse nicht dargestellt ist. Die beiden Enden der Induktionsschleifen 11 (oder Spulen) sind mit den Eingängen von Operationsverstärkern 12 verbunden und an + und - angeschlossen. Zwischen minus und einem Schleifenende ist ein Halbleiterschaltelement 13 vorhanden, mit dem ein Rechtecksendeimpuls erzeugt wird. Anstelle der Operationsverstärkerschaltungen sind auch andere Verstärkerschaltungen möglich. Ebenfalls ist denkbar, die Erzeugung von dreieck-, sägezahn- oder sinusförmigen Signalen mit ein oder mehreren Frequenzen, die nacheinander gesendet werden.

Die Operationsverstärkerschaltungen 10 sind gruppenweise mit einem Zählerbaustein 14 verbunden. Der an einem Taktgenerator 16 angeschlossene Zählerbaustein 14 weist mehrere Ausgänge A, B, C auf, die nacheinander logisch High gesetzt werden. Diese sind mit Steuereingängen der Halbleiterschaltelemente 13 derart verbunden, dass jeweils eine Gruppe A, B oder C von nicht benachbarten Sensoren 4 bzw. Induktionsschleifen einen Reckeckimpuls senden, um die bereits beschriebene Vermeidung einer Beeinflussung der Sensoren 4 untereinander zu erreichen. Weiterhin sind die Ausgänge A, B, C des Zählerbausteins 14 mit einer Zeitablaufsteuerung 15 verbunden, wobei nur ein Kanal A dargestellt ist. Sie steuert einzelne Sampleund Hold-Stufen 17 zum Abtasten jeweils einer z.B. exponentiell fallenden Abklingkurve von in den Schleifen 11 induzierten Sekundärsignalen.

Die Sample- und Hold-Stufen 17 sind an den Ausgängen der Operationsverstärker 12 angeordnet und mit diesen verbunden, wobei jeweils zwei Sample- und Hold-Stufen 17 für in diesem Fall zwei Abtastwerte pro Abklingkurve vorhanden sind.

Nach den Sample- und Hold-Stufen 17 folgen zwei Verstärkungselemente 18, 19 mit denen ein Rücksetzen der Abtastwerte möglich ist (Reset-Leitung 20, die mit einer Logiksteuerung 25 verbunden ist). Die Verstärkung des zweiten Verstärkungselementes 19 (zweites Zeitfenster) ist zum Verschieben eines Diskriminationspunktes veränderbar, damit in jedem Fall diese höher als die Verstärkung des ersten Verstärkungselementes 18 (erstes Zeitfenster) ist. Bei mehreren Zeitfenstern, die später näher beschrieben sind, muss die Verstärkung in zweiten, dritten und weiteren Zeitfenstern ebenfalls veränderbar sein.

Nach den Sample- und Hold-Stufen folgen analoge Subtraktionselementen 22 für ein schnelles Subtrahieren der Abtastwerte.

Ein in Fig. 2 gezeigter A/D-Wandler 23 dient zum Digitalisieren des ersten, analogen Abtastwertes. Ein weiterer in Fig. 2 gezeigter A/D-Wandler 24 dient zum Digitalisieren des analogen Differenzwertes. Die A/D-Wandler 23, 24 können im einfachsten Fall durch Komparatoren ersetzt werden.

Weiterhin ist eine Logiksteuerung 25 zum Verarbeiten der digitalisierten Abtastwerte und der digitalisierten Differenzwerte und zum Ausgeben von Steuerbefehlen zur Steuerung der Trennvorrichtung 8 vorgesehen.

Das Abtasten ist prinzipiell auch mit anderen Abtastmitteln anstelle der Sampleund Hold-Stufen 17 möglich. Die dargestellte Zeitablaufsteuerung 14, der Zählerbaustein 15, der Taktgenerator 16, die A/D-Wandler 23,24 müssen auch nicht unbedingt gesonderte Bausteine sein. Sie können in einem oder mehreren Bausteinen integriert werden. Auch die Einhaltung welche Signale analog oder digital sind, kann verändert werden.

Mit dieser Schaltungsanordnung ist ein Verfahren, insbesondere zum Aussortieren von Metallobjekten 2 einer bestimmten Materialeigenschaft, insbesondere von Buntmetallen untereinander, eines Schüttguts unter Verwendung eines Detektors 4, welcher mindestens eine Detektion der Materialeigenschaft und Erfassung des Ortes eines Metallobjektes 2 innerhalb des Schüttguts vornimmt, möglich.

Die Detektion erfolgt erfindungsgemäß mittels mehrerer, vorzugsweise einer Vielzahl, der Puls-lnduktions-Einzelsonden 4, die den Detektor 3, vorzugsweise wie eingangs beschrieben, bilden und z.B. Sekundärsignale erfassen, wobei Änderungen der von den Metallobjekten 2 ausgestrahlten z.B. Sekundärsignalen zum Aussortieren ausgewertet werden.

Bei der gezeigten Schaltungsanordnung wird jeweils eine Signaländerung einer Puls-Induktions-Einzelsonde 4 durch ein Analogsignal in Form einer exponentiell fallenden Abklingkurve dargestellt, wobei ein in einem ersten Zeitfenster (Verstärker 18) aufintegriertes (Kondensator der Sample- und Holdstufe 17) erstes Signal gebildet wird, welches zeitnah zu einem Rechteck-Sendeimpuls (Zählerbaustein 14) ist und mindestens einen ersten Abtastwert bildet.

Weiterhin wird bei der Schaltungsanordnung gemäß Fig. 2 ein in einem zweiten Zeitfenster (Verstärker 19) aufintegriertes zweites Signal gebildet, welches im flacheren Verlauf der Abklingkurve entsteht und einen zweiten Abtastwert bildet, wobei ein Differenzsignal (Subtrahierer 22) aus den beiden Zeitfenstern erzeugt wird, welches eine Information über die Steilheit der Abklingkurve beinhaltet, die einer Zeitkonstante des Metallobjekts entspricht und zum Aussortieren dient.

Bei dem erfindungsgemäßen Verfahren ist es besonders zweckmäßig, dass das Differenzsignal, welches durch den Subtrahierer 22 gebildet wird, ein analoges Signal ist.

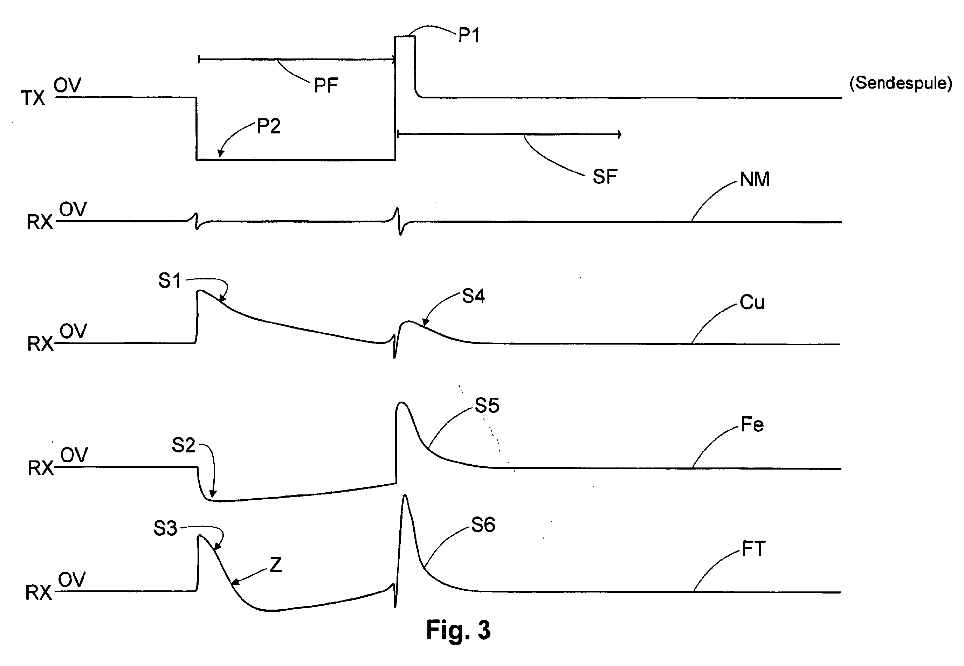

Gemäß der EP 0 729 039 A2 (Fig. 3) können bei diesem Verfahren ebenfalls mehr als drei, z.B. acht, Abtastwerte gebildet werden. Eine anschließende rechnerische Verarbeitung erfolgt bevorzugt in digitaler Form. Eine vollständige analoge Verarbeitung ist aber auch möglich. Bevorzugt werden ein Teil der Abtastwerte zu einer ersten Summe aufaddiert und durch einen Differenzverstärker von einer zweiten Summe des anderen Teils der Abtastwerte subtrahiert.

Möglich ist auch, dass bei Erreichen einer vorgegebenen Signalstärke bei einem der ersten Zeitfenstern eine Speicherung der übrigen Abtastwerte - vorzugsweise mit einem Mikroprozessor - erfolgt, und dass die abgespeicherten Abtastwerte mit Referenzwerten verglichen werden, die bestimmten Materialeigenschaften von Metallobjekten zugeordnet sind.

Grundsätzlich ist es wichtig, dass die Puls-Induktions-Einzelsonden 4 der Reihenfolge nach oder auch rein zufällig nacheinander zeitversetzt gepulst werden, wobei, wie durch die in Fig. 2 dargestellte Schaltungsanordnung gezeigt worden ist, Gruppen von - anstelle von nur zwei Sonden (vgl. z.B.
Kanal A) - 5 bis 15 nicht unmittelbar nebeneinander benachbart angeordneten Puls-Induktions-Einzelsonden 3 nacheinander gepulst werden.

Eine Auswertung der Abtastergebnisse erfolgt durch einen Mikroprozessor in den Zeitzwischenräumen zwischen oder während den einzelnen Pulsen. Ein Abtasten und eine Signalverarbeitung in der Logiksteuerung 25 ist nicht nur auf exponentiell fallende Abklingkurven während dieser Abtastzeit beschränkt, sondern auch während einer Primärphase PF und mit anderen Signalverkäufen S1-S6 möglich und vorteilhaft, wie später erläutert ist.

Ein Verfahren, mit dem eine Erkennung einer Materialeigenschaft eines Objekts weiter verbessert wird, und auch anders als bei bekannten Verfahren auch weitgehend objektgrößenunabhängig erfolgt, ist nachfolgend beschrieben.

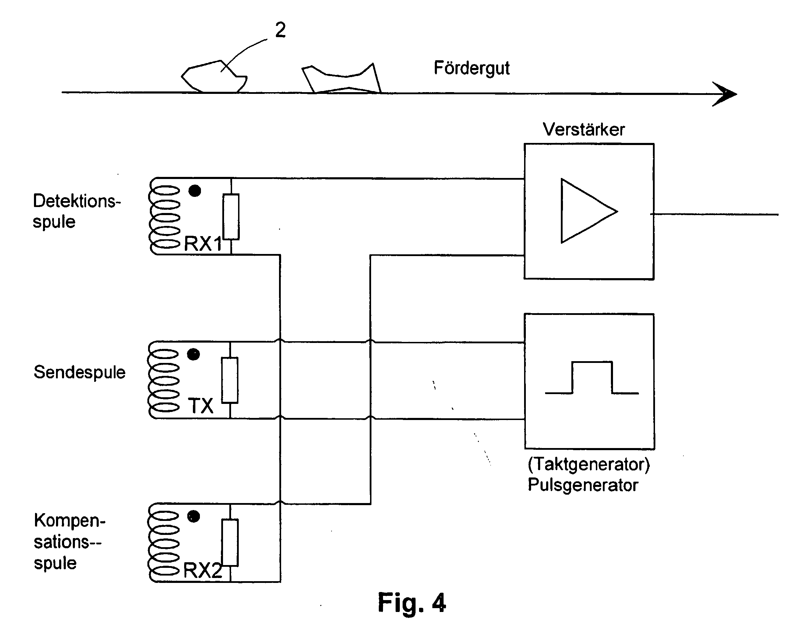

Zum Erkennen von Objekten 2, 50 - 53 unterschiedlicher Materialien, die in Fig. 1 prinziphaft abgebildet sind, vorzugsweise von Metallen aber auch NichtMetallen, die elektrisch leitfähig sind, wie Salze, wird mittels den in Fig. 1 dargestellten Sonden 4 bzw. Puls-Induktions-Spulen 4 (Fig. 4) ein Primärimpuls P2 gesendet, welcher in Fig. 3 veranschaulicht ist.

Es wird also neben dem eigentlich induzierten Signal S4, S5, S6 (Fig. 3), der infolge des Impulses P2, der an sich bekannt ist (vgl. GB 20 41 532), in der Puls-Induktion-Spule 4 zusätzlich noch ein anderes Signal ausgewertet. Dieses andere Signal ist ein zweites in derselben Puls-Induktions-Spule 4 induziertes Signal z.B. S1, S2, S3, welches sich aufgrund mindestens einer Materialeigenschaft des Objekts 2, 50 - 53 von dem eigentlichen ersten Signal S4, S5, S6 unterscheidet.

Eine - nicht dargestellte - vorteilhafte Ausführung dieses Verfahrens besteht darin, das zweite Signal ohne weitere Impulse P2 als induzierte Spannung bzw. Strom zu erkennen, wobei eines dieser nicht verwendeten Impulse P2 in Fig. 3 dargestellt ist. Diese Spannung wird induziert, wenn ein - im einfachsten Fall - Permanentmagnet durch das in Fig. 1 dargestellte Förderband 6 läuft. Zwischen der Puls-Induktions-Spule 4 und einem magnetischen Objekt 50, insbesondere einem ferromagnetischen Objekt 51 findet eine Relativbewegung statt, die eine Induktions-Wechselspannung in der Puls-Induktions-Spule 4 hervorruft. Die Induktions-Wechselspannung kann gemessen oder abgetastet werden und ist abhängig von der Geschwindigkeit des Förderbandes. Aber auch weniger magnetische Materialien, im Prinzip aber alle magnetischen Materialien, können durch diesen Effekt, auch ohne einen Impuls P2, erkannt werden. Auf diese Weise können Elektromotoren oder dergleichen, die Permanentmagnete oder magnetische Werkstoffe ohne zusätzliche Sensoren detektiert werden.

Zweckmäßigerweise wird aber das zweite Signal durch einen Sendeimpuls P2 erzeugt, welches gegenüber einem Pulssignal des ersten eigentlichen Signals eine unterschiedliche Polarität und/oder eine unterschiedliche Impulsbreite und/oder Impulshöhe, vorzugsweise jedoch eine unterschiedliche Polarität und Impulsbreite, insbesondere eine negative Polarität und größere Impulsbreite, aufweist, wie in Fig. 3 gezeigt ist. Das zweite Signal S1, S2, S3 wird durch den Impuls P2 erzeugt. Dieser ist dem Impuls P1 zeitlich direkt vorgeordnet. Dies bedeutet in dem gezeigten Fall, dass die aufsteigende Impulsflanke des Signals P2 direkt in die aufsteigende Flanke des Signals P1 übergeht. Das zweite Signal S1, S2, S3 stellt ein Primärsignal dar, wobei das eigentliche erste Signal ein Sekundärsignal S4, S5, S6 darstellt. Beide Signale S1,S4; S2,S5; S3,S6 werden zur Erkennung des Objekts 2, 50-53 durch eine vergleichbare Schaltungsanordnung gem. Fig. 2 abgetastet und ausgewertet. In einem anderen Fall können die Impulse P2 beispielsweise durch an die andere Polarität geschaltete zweite nicht dargestellte Halbleiterschaltelemente erzeugt werden, wobei die zeitliche Steuerung der Schaltung sowie der Auswertung entsprechend angepasst ist.

Der Impuls P2 ist einer Primärphase PF zugeordnet und mit dieser zeitlich identisch. Der Impuls P1, der durch die Sendespule automatisch nach Abschalten von P2 generiert wird, wird einer Sekundärphase SF zeitlich zugeordnet, wobei diese Impulsdauer erheblich kürzer als eine Auswertephase SF ist, mindestens jedoch 0,5 % davon. Beide Phasen PF, SF sind Auswertephasen, die durch jeweils einen Zeitpfeil in Fig. 3 dargestellt sind. In diesen Phasen PF, SF ergeben sich signifikante Signaländerungen, wie gut zu sehen ist. Diese Phasen PF, SF enthalten die Information über die Materialeigenschaft eines Objekts.

Der Signalverlauf TX entspricht einem typischen Signal in einer Sendespule, wobei eine Gegeninduktionsspannung (P1) von z. B. 100 bis 800 Volt entstehen kann. Die Signale S1-S6 entsprechen Signalen in einer Empfangsspule. Während bei Anordnung mit nur einer Spule ein Umschalten (von TX auf RX) erforderlich ist, kann mit getrennten Sende- und Empfangsspulen im gesamten Zeitverlauf sowohl gesendet, als auch empfangen werden. Nur bei Auftreten einer Gegeninduktionsspannung P1 ist es zweckmäßig direkt nach der Sendephase einen Empfänger kurz auszuschalten.

Besonders wichtig ist es, dass während der Primärphase PF, in der noch ein Sendeimpuls P2 vorhanden ist, eine Signalauswertung erfolgt, weil Materialeigenschaften sehr deutlich anhand dieses Impulsverlaufes erkannt werden können.

Sehr relevant ist auch, dass die in den Signalen enthaltene Information der Materialeigenschaft, die ausgewertet wird, eine Magneteigenschaft, insbesondere eine ferromagmetische Magneteigenschaft und/oder die elektrische Leitfähigkeit und/oder ein Schwingungsverhalten des Objekts ist.

Dieses soll anhand der Fig. 3 erläutert werden. Fig. 3 zeigt fünf Spannungsverläufe, wobei jede Grundlinie 0 Volt darstellt. Die oberste Kurve (TX) zeigt den Impulsverlauf in einer Sendespule TX mit einem längeren Impuls P2 (Primärphase) als der Gegenspannungsimpuls P1. Der Impuls P2 ist mindestens fünf mal länger, kann aber grundsätzlich auch viel länger sein. Der Impuls P2 ist negativ. Alle anderen Kurven stellen Induktionsspannungen in einer Empfangsspule RX dar. Für die Erregung von schwingfähigem Draht können auch kürzere Pulse mit sich kontinuierlich ändernder Frequenz (P2) nötig sein. Schwingfähige Objekte (Drähte) können z. B. mit schmalen Pulsen oder sinusförmigen Sendesignalen mit sich ändernder Frequenz (durchwobbeln in einem bestimmten Frequenzbereich) durch ihre Antennenwirkung und Resonanzfrequenz zum Schwingen erregt werden.

Eine eigens hierfür um die Einzelspulen angeordnete große Sendespule, die solche Drähte besendet, ist sinnvoll. Die Einzelspulen (Sonden) arbeiten bei diesem Vorgang lediglich als Empfangsspulen und können das empfangene Signal getrennt von der Metallerkennung der Elektronik zur Verfügung stellen. Auch die Einzelsonden können durch das gleichzeitige oder zeitversetzte Senden von Pulsfolgen mit sich ändernder Frequenz diese zum Erzeugen eines Signals benutzen und abwechselnd mit normalen Pulsfolgen für die Metallerkennung umgeschaltet werden.

Der zweite Spannungsverlauf NM entsteht im Fall, wenn kein metallisches oder elektrisch leitfähiges Objekt detektiert wird. Diese Spannungsänderungen sind vernachlässigbar und deuten auf ein solches Objekt hin.

Die dritte Kurve Cu zeigt die Reaktion der Sonde 4 bei einem Massivteil aus Kupfer. Während der Primärphase PF entsteht ein steiler Anstieg nach oben und ein langsames Abklingen der Spannung (S1), dagegen ist der Anstieg in der Sekundärphase SF gering sowie das Abklingen langsam (S4). Dieser Signalverlauf ist typisch für dieses Material. Massives Aluminium weist einen ähnlichen Verlauf auf.

Völlig anders ist es bei Eisen (Fe-Kurve). Diese vierte Kurve weist sogar zuerst einen negativen Verlauf auf (S2). Ferromagnetische Metalle erzeugen ein negatives Signal, welches getrennt ausgewertet werden kann.

Wie anhand der fünften Kurve FT gut zu sehen ist, welche einen Signalverlauf bei einem Folienteil darstellt, ist dieser Signalverlauf auch sehr gut von dem Signalverlauf anderer Metalle zu unterscheiden, wobei die Kurve FT auch typisch für VA-Metall ist. Da diese Kurve auch einen Nulldurchgang (Z) aufweist, ist eine Zeitmessung dieses Punktes ab der fallenden Impulsflanke des Sendeimpulses P2 möglich. Dieses Messergebnis dient ebenfalls zur elektronischen Auswertung und zum Trennen mittels einer Trennvorrichtung 8. Durch ein Primärsignal S1, S2, S3 können daher Fehlauswertungen erheblich reduziert werden können.

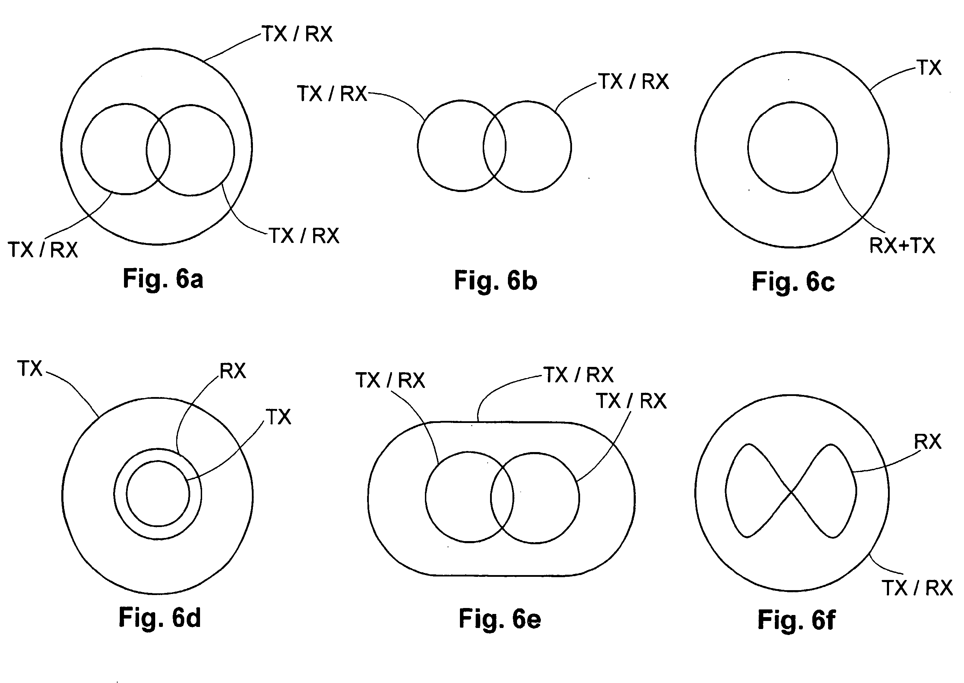

Besonders vorteilhaft ist der mögliche Vergleich von Primär- und Sekundärsignalen untereinander. Durch einen einfachen Intensitätsvergleich der Spannungen an den Sonden 4 können sogar folienartige Metalle von Buntmetallen unterschieden werden, weil folienartiges Metall sowie VA-Stahl ein besonders typisches Signal erzeugt (Kurve FT, Fig. 6.). Eine Messung der Zeitkonstanten bzw. Abtastung während der Primärphase ist zur Buntmetalldetektierung vorteilhaft, insbesondere bei massiven Teilen.

Möglich ist auch, dass mehrere Impulse P2 durch die Puls-induktions-Spule 4 gesendet werden, welche das zweite Signal erzeugen. Hierbei ist auch eine Schwingungsneigung (Resonanz) z.B. unterschiedlicher Drähte erfassbar, die getrennt ausgewertet werden kann.

Das zweite Signal kann auch durch unterschiedlich lange Sendepulse d.h. eine sich zeitlich ändernde Impulsdauer erzeugt werden. Dieses daraus gewonnene, zweite Signal ist im Prinzip die zusätzliche Information zu den bereits bekannten Abklingkurven und kann ebenfalls ausgewertet werden, wie beim oben erläuterten Permanentmagnet- bzw. Induktionseffekt. Die unterschiedlich langen Sendepulse erzeugen ebenfalls bestimmte objektspezifische Primärund Sekundärsignale. Das zweite Signal ist daher eine materialtypische Signaldifferenz, die sich durch Vergleich mindestens von zwei Sekundärsignalen ein und desselben Objekts ergibt. Durch Einfach- und Mehrfachmessung können nach dem Sekundärsignalprinzip durch die Steilheit der Kurve(n) Materialeigenschaften detektiert werden, die durch eine Auswerteeinrichtung z.B. zur Mülltrennung dienen können. Mehrere Impulse hintereinander bilden außerdem, ähnlich wie ein positiver und ein negativer Impuls (bipolarer Puls), ein magnetisches Wechselfeld in der Puls-Induktions-Spule 4, welches zur Erkennung der Materialeigenschaft dienen kann.

Jedes Signal lässt sich in seine Frequenzanteile zerlegen. Daher ist es vorteilhaft, dass Frequenzanteile und/oder der Phasenwinkel des während einer Primärphase PF gewonnenen zweiten Signals S1, S2, S3 ausgewertet werden.

Ein Vergleich mit dem Sekundärsignal (zeitlich nach der Sendephase) ergibt eine eindeutige Information über bestimmte Metallarten, wie Platinen, Folienmaterial, VA-Stahl, magnetische Metalle sowie Materialien, Massivteile aus Buntmetall. Selbst Metalle, die in einer der beiden Phasen PF, SF kein Signal erzeugen oder sogar Autoreifen, die nur ein Primärsignal, wegen ihrer magnetischen Eigenschaft, erzeugen, können durch eine entsprechend programmierte Logiksteuerung 25 detektiert werden.

Möglich ist auch die Ortung von Gold und Metallen in mineralischem Gestein.

Eine Verbesserung einer Störsicherheit gegen unerwünschte magnetische Fremdeinkopplungen von z.B. in der Nähe der Sonden befindlichen Maschinen oder anderen magnetischen Verseuchungsquellen ist durch die nachfolgenden Sonden gemäß Fig. 4 - 6 möglich.

Fig. 4 zeigt eine Puls-Induktions-Einzelsonde, die in einem Detektor gemäß Fig. 1 eingesetzt werden kann. Diese besteht aus mehreren Spulen, die als Puls-Induktionsspulen ausgebildet sind, wobei eine erste Spule als Sendespule TX und eine zweite Spule als Empfangsspule RX1 ausgebildet ist. Hierbei ist wesentlich, dass beim Puls-Induktionsprinzip jede einzelne Spule mit einem Widerstand parallel zur Spule bedämpft wird, um Schwingungen zu vermeiden.

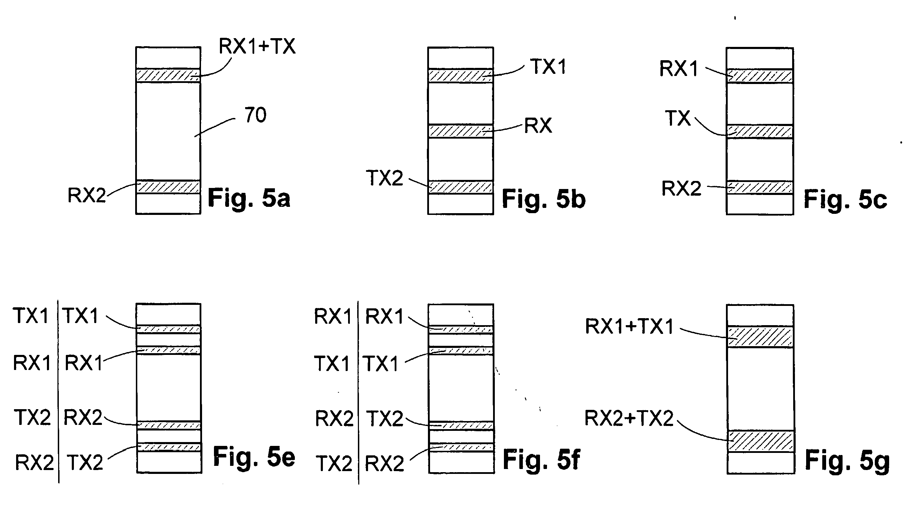

Wie dargestellt, ist die zusätzliche eine Spule RX2 in der Sonde angeordnet. Diese ist als Empfangsspule RX2 ausgebildet und zwar derart, dass die Spulen insgesamt derart angeordnet, ausgebildet und gegeneinander geschaltet sind, dass eine Induktionsbalance zwischen beiden Empfangsspulen RX1, RX2 besteht. Eine Induktionsbalance wird hier dadurch erreicht, dass die Spulen RX1, RX2 (vor Störfeldern und dem Sendeimpuls P2) entkoppelt sind, weil durch ihre Schaltung die Summe der induzierten Signale Null ist. Sie sind nämlich gegeneinander geschaltet (räumlich 180°), haben eine besondere räumliche Anordnung (Fig. 5 - 6) und weisen eine angepasste (z.B. Fig. 6c) oder gleiche Windungszahl (Fig. 5g) auf.

Die zu entkoppelnden Spulen (TX1, TX2; RX1, RX2) können übereinander (Fig. 5b, 5c, 5f) oder nebeneinander oder konzentrisch umeinander (Fig. 6c, 6d) oder überlappend (Fig. 6a, 6b, 6e) angeordnet sein. Sie können aber auch umeinander gewickelt sein (Fig. 5a, 5g), was einer zentrischen Anordnung ohne Abstand entspricht. Aber auch andere Spulenanordnungen (Fig. 6f) sind möglich, insbesondere exzentrische, doppel-D-förmige, 8-förmige (Fig. 6f) sowie Koplanare.

Zweckmäßig ist es, die Spulen TX, TX1, TX2; RX, RX1, RX2 auf einem zylindrischen Wickelkörper 70 anzuordnen. Vorzugsweise sind zwei Sendespulen TX, TX1, TX2 und zwei Empfangsspulen RX, RX1, RX2 angeordnet (Fig. 5e, 5g) oder insgesamt nur drei Spulen mit entweder zwei Sende- und einer Empfangsspule (Fig. 5b, 6a, 6c, 6d) oder umgekehrt (Fig. 5c, 6e, 6f).

Sehr vorteilhaft bei diesen Anordnungen ist es, dass die Sonden 4 nicht untereinander durch eine Taktung beeinflusst werden können. Diese auf "Balance" geschaltete Spulen ermöglichen geringe Verzögerungszeiten zwischen Sende- und Empfangsignalen in der Sekundärphase. D.h. schonnach 5 Mikrosekunden nach einem Abschalten eines Sendetransistors 13 (Fig. 2) kann eine Messung während der Sekundärphase vorgenommen werden. Auf diese Art können Metalle mit sehr kleiner Zeitkonstante detektiert werden. Die Schaltung gem. Fig. 2 kann mit weiteren Halbleiterschaltungen 10 für die Spulen , TX1, TX2; RX, RX1, RX2 ausgebildet sein, wobei die Spulen in analoger Weise (gem. Fig. 2) angesteuert und Spannungen in ihnen abgetastet werden können. Analog kann eine Auswertung auch bei Signalen gem. Fig. 3 erfolgen. Durch Verbindung (Korrelierung) vieler Messpunkte (viele Zeitfenster) in den Phasen PF, SF kann eine Auswertung ebenfalls mittels eines Mikroprozessors in analoger Weise (Fig. 2) erfolgen.

Eine erhebliche Reduzierung der Sensorbeeinflussung untereinander kann auch dadurch erreicht werden, dass die Sonden nach einem vorherbestimmten definierten Muster nacheinander zeitversetzt gepulst werden. Vorzugsweise dadurch, dass das Muster derart ist, dass nur jede n-te Sonde innerhalb eines Pulszyklus gepulst wird, wobei die zwischen-liegenden und/oder benachbarten vorher nicht gepulsten Sonden nach dem Pulszyklus nach diesem Muster gepulst werden, wobei n eine ganze Zahl, insbesondere größer oder gleich drei, z. B. vier ist, kann die gegenseitige Beeinflussung der Sensoren reduziert werden.

Bei mindestens 15 nacheinander angeordneten Sonden kann folgendes Muster eingesetzt werden:

| | |
|---|---|
| 1. Sonde | Puls 1 |
| 2. Sonde | Puls 6 |
| 3. Sonde | Puls 11 |
| 4. Sonde | Puls 2 |
| 5. Sonde | Puls 7 |
| 6. Sonde | Puls 12 |
| 7. Sonde | Puls 3 |
| 8. Sonde | Puls 8 |
| 9. Sonde | Puls 13 |
| 10. Sonde | Puls 4 |
| 11. Sonde | Puls 9 |
| 12. Sonde | Puls 14 |
| 13. Sonde | Puls 5 |
| 14. Sonde | Puls 10 |
| 15. Sonde | Puls 15 |
| 16. Sonde | Puls 1 |
| 17. Sonde | Puls 6 |
| 18. Sonde | Puls 11 |
| 19. Sonde | Puls 2 |
| usw. | |

Das heißt, die erste, vierte, siebte Sonde usw. werden nacheinander gepulst, bis die 13. Sonde erreicht ist (Puls 5). Danach fängt ein neuer Pulszyklus mit dem nächsten Puls an, wobei als nächstes die 2. Sonde (Puls 6) gepulst wird.

Die Pulse 1-6-11-2-7-12-3 usw. stellen eine Zahlenreihe dar.

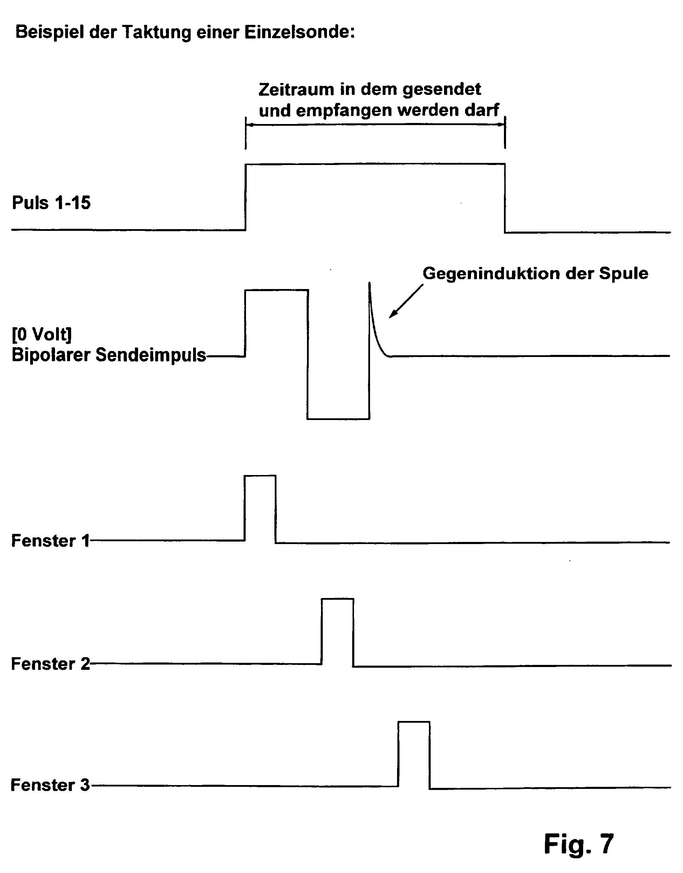

Die Pulse 1 bis 15 in dem besagten Beispiel verstehen sich lediglich als Taktsignal und werden entsprechend der vorher beschriebenen Verfahren in weitere Einzelimpulse zerlegt, z. B. Sendepuls: Fenster 1, Fenster 2, ... Fenster 10 (siehe auch Figur 7). Es sollte immer eine Verweildauer, d. h. eine Ruhezeit, in der Sender und Empfänger ausgeschaltet sind, zwischen dem letzten Fenster und dem nachfolgenden Puls vorhanden sein, um Störungen von steilflankigen Recheckpulsen zu vermeiden. Die gesamte Elektronik oder Teile davon können in dieser Ruhezeit zurückgesetzt werden. Der Vorteil dieses Verfahrens besteht in einer verhältnismäßig hohen Wiederholfrequenz der Einzelsonden. In dem Beispiel von 15 Einzelsonden liegt die Wiederholfrequenz jeder einzelnen Sonde bei über 500 Pulsen pro Sekunde. Diese Wiederholfrequenz kann durch schmalere oder bipolare Pulse oder eine geringere Anzahl von Einzelsonden stark erhöht werden.

Eine Ansteuerung der Sonden gruppenweise, wie vorher erläutert, z. B. auch 5 bis 15 Sonden, ist ebenfalls möglich und ohne dieses Muster zu verlassen. Zwischen dem letzten Puls (Puls 15) des letzten Pulszyklus und der nächsten Reihe ist vorzugsweise eine Pulspause, insbesondere von ein oder zwei Pulszeitabständen vorgesehen.

In einer weiteren vorteilhaften Weiterbildung der Erfindung ist vorgesehen, dass die Sonden, insbesondere als Einzelsonden, übereinander angeordnet sind. Sie können unmittelbar übereinander angeordnet sein, d. h. auf einer für beide Sonden gemeinsamen Erfassungsachse oder grundsätzlich auch übereinander und geringfügig versetzt zueinander angeordnet sein, d. h. mit jeweils unterschiedlichen Erfassungsachsen. Durch die übereinanderliegende Anordnung ist eine Größen und/oder Tiefenerkennung von Metallobjekten, insbesondere im Erdreich, möglich. Je nachdem, ob ein großes oder kleines bzw. der Erdbodenoberfläche nahes oder fernes Metallobjekt vorliegt, sind die Signale der Sonden unterschiedlich oder in etwa identisch. Durch eine rechnerische Auswertung der Empfangssignale der Sonden kann die Tiefe und/oder die Größe eines Metallobjekts im Erdreich erfasst werden. Beispielsweise erzeugt ein tiefes Metallobjekt in der bodennahen (unteren) Sonde ein relativ schwaches Signal und in der oberen Sonde ein noch schwächeres Signal. Dagegen erzeugt ein relativ großes Metallobjekt in beiden Spulen kaum unterscheidbare starke Signale. Ist dieses große Objekt dagegen tief im Erdreich vergraben, sind beide Signale relativ schwächer als die des weniger tief liegendes Objekts, aber ebenfalls kaum voneinander zu unterscheiden. Ein kleines tiefliegendes Objekt erzeugt nur in der bodennahen Sonde ein Signal.

Vorzugsweise werden das Signal für die obere Sonde und die untere Sonde nacheinander gesendet und zwar soweit zeitlich nacheinander, dass keine Beeinflussung der Sonden untereinander möglich ist.

Die Erfindung ist nicht nur auf die beschriebenen Ausführungsformen beschränkt, sondern umfasst auch andere gleichwirkende Ausführungsformen. So können zusätzlich andere Detektoren in Kombination mit dem Detektor 4 verwendet werden, oder andere Fördermittel anstelle eines Bandes in einer Sortieranlage genutzt werden. Die obigen Verfahren und Sonden können auch in einer (z.B. einzigen) tragbaren Sonde oder einer als Trichter ausgeführten Sonde, bei der das Förder- oder Schüttgut durch die Sonde fällt, eingesetzt werden. Sie können auch z. B. zur Ortung von Metallen, Gold und Gestein mit Metalleigenschaft im Erdreich eingesetzt werden.

Eine Materialerkennung ist auch mit einem sequentiellen Durchführen mehrerer dieser Verfahren möglich. Zuerst kann ein Hin- und Herbewegen einer Sonde 4 relativ zum Objekt erfolgen. So kann überprüft werden, ob das Material Permanentmagnet-Eigenschaften aufweist und eine Spannung überhaupt ohne Puls- bzw. Primärsignal induzieren kann (Generatorprinzip mit Permanentmagnet). Danach kann eine Wechselspannung mit sich ständig ändernden Frequenz an die Sonde -angelegt werden (ohne Hin- und Herbewegen). So können Eisen oder Metalle mit Schwingverhalten (Resonanzverhalten) gut ermittelt werden (Veränderung des Magnetwechselfeldes, Veränderung der Induktivität). Danach erfolgt eine Untersuchung mit nur einem oder zwei Pulssignalen (Sekundärsignal oder Primär- und Sekundärsignal, Puls-Technik-Prinzip). Dies ist im Prinzip mit nur einer einzigen Sonde 4 und im Prinzip mit nur einer einzigen Induktionsschleife 11 möglich.

Diese Verfahren können aber auch gleichzeitig mit nur einer einzigen Sonde 4 zur Materialerkennung genutzt und kombiniert werden.

### Bezugszeichenliste:

- 1: Sortieranlage
- 2: Metallobjekt (Buntmetall)
- 3: Detektor
- 4: Puls-Induktions-Einzelsonden
- 5: Vibrationsrinne
- 6: Schüttgut-Förderband
- 7: Grenze
- 8: Luftdüsen-Anordnung
- 9: Luftdüsen
- 10: Operationsverstärkerschaltung
- 11: Induktionsschleife
- 12: Operationsverstärker
- 13: Halbleiterschaltelement
- 14: Zählerbaustein
- 15: Zeitablaufsteuerung
- 16: Taktgenerator
- 17: Sample- und Hold-Stufe
- 18: erstes Verstärkerelement
- 19: zweites Verstärkerelement
- 20: Reset-Leitung
- 22: Subtraktionselement
- 23: A/D-Wandler (erster)
- 24: A/D-Wandler (zweiter)
- 25: Logiksteuerung
- 50: Gummireifenteil (magnetisches Objekt)
- 51: Magnet (ferromagnetisches Objekt)
- 52: Draht (Objekt mit Schwingungsneigung)
- 53: Leitfähiges nicht metallisches Objekt
- 70: Wickelkörper

## Patentansprüche

1. Verfahren zum Detektieren von Objekten, einer bestimmten Materialeigenschaft, insbesondere von Metallobjekten und/oder Buntmetallen untereinander, unter Verwendung eines Detektors (3), welcher eine Detektion der Materialeigenschaft und Erfassung des Ortes eines Objektes (2) vornimmt, wobei die Detektion mittels mehrerer Puls-Induktions-Einzelsonden (4) erfolgt, die den Detektor (3) bilden und Induktions-Signale (S1-S6) der Objekte erfassen, wobei Änderungen der von den Objekten (2) ausgestrahlten Induktions-Signalen (S1-S6) ausgewertet werden, wobei die Puls-Induktions-Einzelsonden (4) der Reihenfolge nach zeitversetzt gepulst werden,
**dadurch gekennzeichet,**
dass Gruppen von nicht unmittelbar nebeneinander angeordneten Puls-Induktions-Einzelsonden (4) nacheinander gepulst werden.

2. Verfahren nach Anspruch 1,
**dadurch gekennzeichet,**
dass Gruppen von 5 bis 15 nicht unmittelbar nebeneinander angeordneten Puls-Induktions-Einzelsonden (4) nacheinander gepulst werden.

3. Verfahren nach Anspruch 1 oder 2,
**dadurch gekennzeichet,**
dass eine Auswertung in Zeitzwischenräumen zwischen und während den einzelnen Pulsen erfolgt.

4. Verfahren nach einem der vorhergehenden Ansprüche
**dadurch gekennzeichet,**
dass die Sonden (4) nach einem vorherbestimmten, definierten Muster nacheinander zeitversetzt gepulst werden, wobei das Muster eine Zahlenreihe darstellt, sowie die Sonden (4) reihen- oder matrixartig angeordnet sind.

5. Verfahren nach Anspruch 4,
**dadurch gekennzeichet,**
dass das Muster derart ist, dass nur jede n-te Sonde innerhalb eines Pulszyklus gepulst wird, wobei die zwischenliegenden und/oder benachbarten vorher nicht gepulsten Sonden nach dem Pulszyklus nach diesem Muster gepulst werden, wobei n eine ganze Zahl, insbesondere größer oder gleich drei ist.

## Claims

1. A method for detecting objects of a certain material property, particularly metal objects and/or non-ferrous metals among each other, by using a detector (3), which carries out a detection of the material property and a capture of the location of an object (2), with the detection taking place by means of several individual pulse-induction sensors (4), which form the detector (3) and capture induction signals (S1 - S6) of the objects, with changes of the induction signals (S1 to S6) emitted by the objects (2) being assessed, with the individual pulse-induction sensors (4) being pulsed in sequence and time-delayed,
**characterized in**
**that** groups of individual pulse-induction sensors (4), which are not arranged immediately adjacent to each other, are pulsed successively.

2. A method according to claim 1,
**characterized in**
**that** groups of 5 to 15 individual pulse-induction sensors (4), which are not arranged immediately adjacent to each other, are pulsed successively.

3. A method according to claim 1 or 2,
**characterized in**
**that** an assessment takes place in time intervals between and during the individual pulses.

4. A method according to any one of the preceding claims, **characterized in**
**that** the sensors (4) are pulsed successively and time-delayed in a predetermined, defined pattern, with the pattern constituting a series of numbers and the sensors (4) being arranged in rows or matrix-like.

5. A method according to claim 4,
**characterized in**
**that** the pattern is such that only each nth sensor is pulsed within a pulsation cycle, with the intermediate and/or adjacent sensors previously not pulsed being pulsed according to the pulsation cycle pursuant to said pattern, with n being an integral number, particularly greater than or equal to three.

## Revendications

1. Procédé de détection d'objets d'une certaine propriété de matière, en particulier d'objets métalliques et/ou en métaux non ferreux en les distinguant entre eux, avec utilisation d'un détecteur (3) qui exécute une détection de la propriété de matière et une acquisition du lieu d'un objet (2), dans lequel la détection s'effectue au moyen de plusieurs sondes distinctes à impulsion-induction (4), qui forment le détecteur (3) et qui captent des signaux d'induction (S1-S6) des objets, dans lequel des variations des signaux d'induction (S1-S6) émis par les objets (2) sont évalués, et dans lequel les sondes à impulsion-induction (4) sont pulsées avec décalage dans le temps dans l'ordre de la série,
**caractérisé en ce que**
des groupes de sondes à impulsion-induction (4), qui ne sont pas disposées immédiatement l'une contre l'autre, sont pulsés l'un après l'autre.

2. Procédé selon la revendication 1,
**caractérisé en ce que**
des groupes de 5 à 15 sondes à impulsion-induction (4), qui ne sont pas disposées immédiatement l'une contre l'autre, sont pulsés l'un après l'autre.

3. Procédé selon la revendication 1 ou 2,
**caractérisé en ce que**
il se produit une analyse des intervalles de temps entre et pendant les impulsions individuelles.

4. Procédé selon l'une des revendications précédentes **caractérisé en ce que**
les sondes (4) sont pulsées l'une après l'autre de façon décalée dans le temps conformément à un motif défini prédéterminé, le motif représentant une série de nombres et les sondes (4) étant disposées en rangées ou en matrice.

5. Procédé selon la revendication 4,
**caractérisé en ce que**
le motif est tel que seule chaque nième sonde est pulsée dans un cycle d'impulsions, les sondes intercalaires et/ou voisines qui n'ont pas été pulsées antérieurement étant pulsées en fonction du cycle d'impulsions conforme à ce motif, et n étant un nombre entier, en particulier supérieur ou égal à trois.
